Europäisches Patentamt

European Patent Office

Office européen des brevets

(11) Veröffentlichungsnummer: **0 322 689**

**A2**

# EUROPÄISCHE PATENTANMELDUNG

(21) Anmeldenummer: 88121183.3

(22) Anmeldetag: 17.12.88

(51) Int. Cl.⁴ **H01C 10/20 , H01H 3/08 , H02M 5/00**

(30) Priorität: 24.12.87 DE 3744133

(43) Veröffentlichungstag der Anmeldung:
05.07.89 Patentblatt 89/27

(84) Benannte Vertragsstaaten:
**AT CH DE FR LI NL SE**

(71) Anmelder: **Asea Brown Boveri
Aktiengesellschaft
Kallstadter Strasse 1
D-6800 Mannheim 31(DE)**

(72) Erfinder: **Kemmereit, Jürgen
Heinrichsallee 64
D-5860 Iserlohn(DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1(DE)**

(54) **Elektrisches Gerät.**

(57) Bekannte elektrische Geräte zur stufenlosen Steuerung der Betriebsspannung als Aufputz- oder Unterputzgeräte jeweils zur Beschaltung einzelner Stromkreise eingesetzt anstelle von elektrischen Installationsschaltern. Bei Ersatz bekannter Serienschalter, die zur voneinander unabhängigen Ein- und Ausschaltung zweier getrennter Stromkreise dienen, sind jeweils zwei als Dimmer bezeichnete elektrische Geräte erforderlich. Dies erfordert zusätzlichen Einbauraum, der nicht immer zur Verfügung steht.

Ein neues elektrisches Gerät zur stufenlosen Steuerung der Betriebsspannung von elektrischen Verbrauchern, insbesondere von Lampen, ist so gestaltet, daß zwei elektronische Schaltteile (22, 23) darin Platz finden, welche von zwei axial nebeneinander befindlichen Drehwiderständen (24, 25) mit konzentrisch angeordneten Drehachsen (26, 27) ansteuerbar sind.

Ein bevorzugter Einsatzbereich ist die elektrische Hausinstallation.

## Elektrisches Gerät

Die Erfindung betrifft ein elektrisches Gerät zur stufenlosen Steuerung der Betriebsspannung von elektrischen Verbrauchern, insbesondere von Lampen, mit wenigstens einem elektronischen Schaltteil, das von einem einstellbaren Drehwiderstand ansteuerbar ist, dessen Drehachse, die zur Betätigung eines veränderlich einstellbaren Abgriffes dient, eine zur Abdeckung der Frontseite des Gerätes vorgesehene Frontplatte zentrisch durchdringt und einen an ihrem Ende aufgesetzten Drehgriff aufweist, der zur manuellen Einstellung dient.

Es ist bekannt, die Leistung elektrischer Verbraucher durch stufenlose Steuerung ihrer Betriebsspannung den jeweiligen Erfordernissen anzupassen. Insbesondere ist neuerdings die stufenlose Helligkeitssteuerung elektrischer Lampen weit verbreitet, die mittels elektrischer Schaltgeräte der eingangs genannten Art vorgenommen wird.

Anstelle der bislang eingesetzten elektrischen Installationsschalter, welche zur Ein- und Ausschaltung elektrischer Lichtstromkreise eingesetzt werden, treten in zunehmendem Maße sog. Dimmer, das sind elektronische Schalter, welche die stufenlose Leistungsanpassung, d. h. hier Helligkeitseinstellung, ermöglichen.

Die Installation derartiger elektrischer Geräte (Dimmer) ist in gleicher Weise vorgesehen wie die der elektrischen Schalter, d. h. entsprechend der heute verbreiteten Unterputzinstallation in genormten Einbaudosen.

Dabei stellt sich folgendes Problem. Während elektrische Schalter als sog. Serienschalter ausgeführt sein können, welche die gleichzeitige, voneinander unabhängige Beschaltung unterschiedlicher Stromkreise gestatten, in einer Einbaudose Platz finden, beanspruchen bekannte Dimmer zur Beschaltung eines Stromkreises jeweils einen Einbauplatz entsprechend einer Einbaudose. Soll also ein Serienschalter durch entsprechende Dimmer ersetzt werden, so sind für jeden in einer Einbaudose installierten Serienschalter zwei Einbaudosen für die Aufnahme der Dimmer vorzusehen. Abgesehen von den hierdurch bedingten zusätzlichen Installationskosten zur Herstellung der Aufnahmeöffnung für die Einbaudose kann es auch räumliche Schwierigkeiten geben, nämlich derart, daß nicht genügend Raum zur Aufnahme mehrerer erforderlicher Einbaudosen zur Verfügung steht.

Ausgehend vom vorstehend genannten Stand der Technik ist es Aufgabe der Erfindung ein elektrisches Gerät der eingangs genannten Art zu schaffen, welches anstelle eines Serienschalters einsetzbar ist und so die von einander unabhängige stufenlose Steuerung der Betriebsspannung zweier verschiedener Stromkreise gestattet. Dabei soll auf kostengünstige Herstellbarkeit und leichte Montierbarkeit geachtet werden.

Die Lösung der Aufgabe ist erfindungsgemäß dadurch gekennzeichnet, daß ein erstes Schaltteil mit einem zugeordneten ersten Drehwiderstand und ein zweites Schaltteil mit einem zweiten Drehwiderstand vorgesehen sind, deren Drehachsen konzentrisch zueinander durch die Frontplatte nach außen geführt sind.

Entsprechend der Erfindung ist dabei vorgesehen, daß die Drehachse des ersten Drehwiderstandes als Hohlwelle ausgebildet ist, durch welche die Drehachse der zweiten Drehwiderstandes koaxial durchgeführt ist. Dabei ist der erste Drehwiderstand unmittelbar der Frontseite benachbart, während der zweite Drehwiderstand axial dahinter angeordnet ist.

Zweckmäßigerweise ist jeder der beiden Drehwiderstände mit einem Halterahmen versehen, der zur Verbindung der beiden Drehwiderstände sowie zu ihrer Befestigung dient.

In vorteilhafter Ausgestaltung der Erfindung ist jede der Drehachsen der beiden Drehwiderstände mit einem am Ende aufgesetzten Drehgriff versehen, der die voneinander unabhängige Betätigung der beiden Drehwiderstände gestattet. Auf die als Hohlwelle ausgebildete Drehachse des ersten Drehwiderstandes ist - zunächst unmittelbar an die Frontplatte anschließend - ein erster Drehgriff aufgesetzt, an welchen - ggf. mit geringem Abstand - ein zweiter Drehgriff zur Betätigung der Drehachse des zweiten Drehwiderstandes axial nach außen weisend anschließt. Hierbei wird der erste Drehgriff von der Drehachse des zweiten Drehwiderstandes durchgriffen, die er gemeinsam mit der als Hohlwelle ausgebildeten ersten Drehachse umfaßt.

Zur eindeutigen Handhabung der beiden Drehgriffe ist es vorteilhaft, daß der erste Drehgriff, der einer Tragplatte benachbart ist, einen größeren Durchmesser aufweist als der außen anschließende zweite Drehgriff.

In zweckmäßiger Ausgestaltung der Erfindung kann der erste Drehgriff schalenförmig mit einem umlaufenden Rand ausgebildet sein, welcher den zweiten Drehgriff umfaßt ähnlich einer Zentrierung. Hierbei ist die axiale Dicke des zweiten Drehgriffes so festgelegt, daß sie wenigstens das dreifache der Höhe des Randes des schalenförmig ausgebildeten Drehgriffes aufweist.

Eine weitere vorteilhafte Ausgestaltung der Erfindung sieht vor, die Umfangsflächen der beiden Drehgriffe mit einer Riffelung oder Narbung versehen sind, welche die Griffigkeit erhöht und so ihre sichere Betätigung gewährleistet.

Diese und weitere vorteilhafte Ausgestaltungen der Erfindung sind in den Unteransprüchen angegeben.

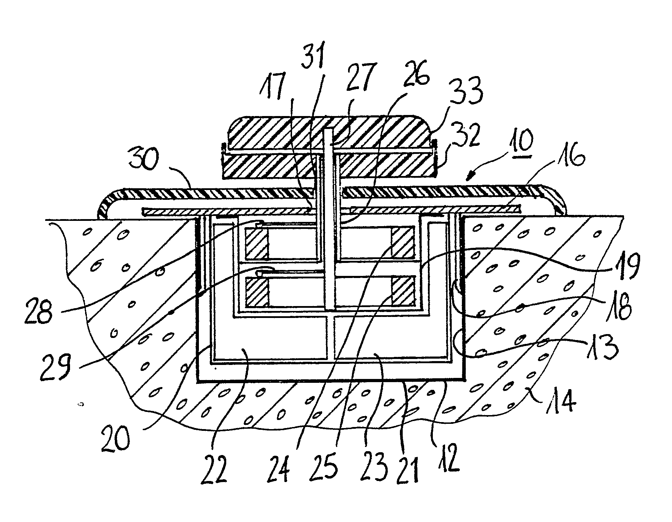

Anhand eines in der Zeichnung dargestellten Ausführungsbeispieles sollen die Erfindung, vorteilhafte Ausgestaltungen und Verbesserungen sowie besondere Vorteile der Erfindung näher erläutert und beschrieben werden.

Es zeigt die einzige Figur:

Den Querschnitt durch ein elektrisches Gerät.

Die einzige Figur zeigt ein elektrisches Gerät 10, daß in einer Unterputz-Einbaudose 12 in einer Wand 14 installiert ist. Hierzu besitzt das elektrische Gerät 10 eine Tragplatte 16, an welche Spreize 18 anschließen, welche sich an die innere Seitenwand 13 der Einbaudose 12 anlegen.

Der Innenraum der Einbaudose 12 ist ausgefüllt von dem elektrischen Gerät 10, das ein Gehäuse 20 besitzt, welches an der Tragplatte 16 befestigt ist und in seinem Inneren zwei elektronische Schaltteile 22, 23 sowie zwei Drehwiderstände 24, 25 aufweist.

Das Gehäuse 20 ist als zylindrischer Körper mit einem ebenen Boden 21 ausgebildet ebenso wie die Einbaudose 12, deren Mittelachsen koaxial zueinander angeordnet sind.

Die Drehwiderstände 24, 25 sind in Form von Ringen mit einem rechteckigen Querschnitt ausgebildet und sind konzentrisch zur Mittelachse des Gehäuses 20 des elektrischen Gerätes 10 in zwei zueinander parallelen Ebenen hintereinander angeordnet und mittels eines Halterahmens 19 drehfest miteinander verbunden und an der Tragplatte 16 befestigt.

Der der Tragplatte 16 nächstliegende, als erster Drehwiderstand 24 bezeichnete Drehwiderstand, der koaxial mit dem axial dahinter angeordneten zweiten Drehwiderstand 25 fluchtet, besitzt in seinem Zentrum eine zur Mittelachse des Gehäuses 20 konzentrisch angeordnete Drehachse 26, die als Hohlwelle ausgebildet ist. Der zweite Drehwiderstand 25 besitzt ebenfalls eine mit der Mittelachse des Gehäues 20 fluchtende Drehachse 27, welche die Drehachse 26 des ersten Drehwiderstandes 24 axial durchgreift und nach außen hin überragt.

Die erste Drehachse 26 des ersten Drehwiderstandes 24 wie auch die zweite Drehachse 27 des zweiten Drehwiderstandes 25 besitzen jeweils einen als Abgriff dienenden Schleifer 28, 29, der jeweils an der nach außen, d. h. zur Tragplatte 16 hin, weisenden Ringfläche des zugeordneten Drehwiderstandes 24, 25 federnd anliegt.

Den frontseitigen Abschluß des elektrischen Gerätes 10 bildet eine Frontplatte 30, welche eine zentrische Ausnehmung 31 aufweist, durch welche die Drehachsen 26, 27 geführt sind, wie zuvor durch die Tragplatte 16, die eine zentrische Ausnehmung 17 besitzt. Ferner ist auf die beiden Drehachsen 26, 27 jeweils ein Drehgriff 32, 33 aufgesetzt, der zur Betätigung des jeweiligen Schleifers 28, 29 am zugehörigen Drehwiderstand 24, 25 dient.

Der auf die als Hohlwelle ausgebildete erste Drehachse 26 aufgesetzte Drehgriff 32 schließt frontseitig bündig mit der Drehachse 26 ab. Hierbei wird er von der zweiten Drehachse 27 des zweiten Drehwiderstandes 25 durchgriffen. Die zweite Drehachse 27 greift in eine im zweiten Drehgriff 33 hierfür vorgesehene Ausnehmung, ohne die frontseitig ebene Fläche des kreisförmigen Drehgriffes 33 zu durchdringen.

In der vorliegenden Darstellung wurde auf die Abbildung der elektrischen Verdrahtungseinzelheiten verzichtet, da Gegenstand der Erfindung die konstruktive und funktionelle Gestaltung der Drehwiderstände 24, 25 mit ihren Drehachsen 26, 27 ist.

Mit Hilfe der in der einzigen Figur beispielhaft gezeigten Ausgestaltung der Erfindung ist es möglich, ein als Duo-Dimmer bezeichnetes elektrisches Gerät anstelle eines bekannten Serienschalters einzubauen, um so die voneinander unabhängige Ein- oder Ausschaltung zweier separater elektrischer Stromkreise zu erreichen.

Die Einzelheiten der elektronischen Schaltteile 22, 23 sind hier nicht näher dargestellt, da ihr Aufbau sowie ihre Wirkungsweise, die nach dem Prinzip der Phasenanschnittsteuerung erfolgt, in dem Stand der Technik bekannt ist.

## Ansprüche

1. Elektrisches Gerät zur stufenlosen Steuerung der Betriebsspannung von elektrischen Verbrauchern, insbesondere von Lampen, mit wenigstens einem elektronischen Schaltteil, das von einem einstellbaren Drehwiderstand ansteuerbar ist, dessen Drehachse, die zur Betätigung eines veränderlich einstellbaren Abgriffes dient, eine zur Abdeckung der Frontseite des Gerätes vorgesehene Frontplatte zentrisch durchdringt und einen an ihrem Ende aufgesetzten Drehgriff aufweist, der zur manuellen Einstellung dient, dadurch gekennzeichnet, daß ein erstes Schaltteil (22) mit einem zugeordneten Drehwiderstand (24) und ein zweites Schaltteil (23) mit einem zweiten Drehwiderstand (25) vorgesehen sind, deren Drehachsen (26, 27) konzentrisch zueinander durch die Frontplatte (30) nach außen geführt sind.

2. Elektrisches Gerät nach Anspruch 1, dadurch gekennzeichnet, daß die Drehachse (26) des ersten Drehwiderstandes (24) als Hohlwelle ausgebildet ist, durch welche die Drehachse (27) des zweiten Drehwiderstandes (25) koaxial durchgeführt ist.

3. Elektrisches Gerät nach einem der Ansprüche 1 oder 2, dadurch gekennzeichnet, daß der erste Drehwiderstand (24) und der zweite Drehwiderstand (25) als Ringe mit rechteckförmigem Querschnitt ausgebildet sind, die axial nebeneinander angeordnet sind, wobei der erste Drehwiderstand (24) frontseitig angeordnet ist.

4. Elektrisches Gerät nach einem der vorherigen Ansprüche, dadurch gekennzeichnet, daß jeder der beiden Drehwiderstände (24, 25) einen Halterahmen (19) aufweist, der zur gegenseitigen drehfesten Verbindung sowie zur Befestigung an einer Tragplatte (16) dient.

5. Elektrisches Gerät nach einem der vorherigen Ansprüche, dadurch gekennzeichnet, daß jede der Drehachsen (26, 27) der beiden Drehwiderstände (24, 25) einen aufgesetzten Drehgriff (32, 33) besitzt, der die Betätigung der Drehwiderstände (24, 25) unabhängig voneinander gestattet.

6. Elektrisches Gerät nach Anspruch 5, dadurch gekennzeichnet, daß der auf die als Hohlwelle ausgebildete Drehachse (26) des ersten Drehwiderstandes (24) aufgesetzte erste Drehgriff (32) nächst der Tragplatte (16) angeordnet ist, und daß der auf die Drehachse (27) des zweiten Drehwiderstandes (25) aufgesetzte zweite Drehgriff (33) axial nach außen weisend daran anschließt.

7. Elektrisches Gerät nach Anspruch 6, dadurch gekennzeichnet, daß der Durchmesser des ersten Drehgriffes (32) größer ist als der Durchmesser des zweiten Drehgriffes (33).

8. Elektrisches Gerät nach Anspruch 7, dadurch gekennzeichnet, daß der erste Drehgriff (32) schalenförmig mit einem Rand ausgebildet ist, welcher den zweiten Drehgriff (33) umfaßt, wobei der zweite Drehgriff (33) den Rand des schalenförmigen ersten Drehgriffes (32) überragt.

9. Elektrisches Gerät nach Anspruch 8, dadurch gekennzeichnet, daß die axiale Dicke des zweiten Drehgriffes (33) wenigstens dem dreifachen der Höhe des Randes des schalenförmigen Drehgriffes (32) entspricht.

10. Elektrisches Gerät nach einem der vorherigen Ansprüche, dadurch gekennzeichnet, daß der Umfang der Drehgriffe (32, 33) mit einer Riffelung versehen ist, welche die Griffigkeit erhöht.

11. Elektrisches Gerät nach einem der Ansprüche 1 bis 9, dadurch gekennzeichnet, daß der Umfang der Drehgriffe (32, 33) mit einer Narbung versehen ist, welche die Griffigkeit erhöht.

12. Elektrisches Gerät nach einem der vorherigen Ansprüche, dadurch gekennzeichnet, daß ein Gehäuse (20) vorgesehen ist, welches zur Aufnahme der elektronischen Schaltteile (22, 23) sowie der Drehwiderstände (24, 25) dient.